# EUROPÄISCHE PATENTSCHRIFT

(11) **EP 0 457 177 B1**
(45) Veröffentlichungstag und Bekanntmachung des Hinweises auf die Patenterteilung: **16.03.1994**
(21) Anmeldenummer: 91107464.9
(22) Anmeldetag: 08.05.1991
(51) Int. Cl.: B60N 2/48

(54) **Kopfstütze für Kraftfahrzeugsitze**
Headrest for car seats
Appui-tête pour sièges de véhicules automobiles

(30) Priorität: 12.05.1990 DE 4015312
(43) Veröffentlichungstag der Anmeldung: 21.11.1991
(73) Patentinhaber: Adam Opel Aktiengesellschaft, 65428 Rüsselsheim (DE); General Motors Espana, S.A., Figueruelas (Zaragoza) (ES)
(72) Erfinder: Quistorf, Dieter, Dipl.-Ing., W-6085 Nauheim (DE); Garmendia, J. Eugenio, Dipl.-Ing., Zaragoza (ES)
(74) Vertreter: Bergerin, Ralf, Dipl.-Ing.

(56) Entgegenhaltungen:
- EP-A- 0 254 808
- EP-A- 0 283 863
- EP-A- 0 412 307
- DE-A- 3 104 628
- DE-A- 3 200 321
- DE-A- 3 327 591
- DE-A- 3 519 351
- DE-A- 3 621 278
- DE-A- 3 712 278

## Beschreibung

Die Erfindung bezieht sich auf eine Kopfstütze für Kraftfahrzeugsitze mit einem von einer Polsterung umgebenen Rahmen, der an zwei parallelen Haltestangen vertikal verstellbar und um eine Horizontalachse schwenkbar angeordnet ist und beidseitig der Kopfstütze je ein die zugeordnete Haltestange aufnehmendes Gehäuse bildet, welches zwei quer zur gemeinsamen Ebene der Haltestange vertikal verlaufende etwa parallele Wandungen, eine mit einer etwa horizontal zu diesen Wandungen senkrecht verlaufenden Achse zylindrische Gelenkschale und - ausgehend von der zylindrischen Gelenkschale - zwei quer zu den etwa parallelen Wandungen keilförmig nach oben divergierende Wandungen aufweist, wobei in der zylindrischen Gelenkschale ein die betreffende Haltestange nach Art einer Führungsbuchse aufnehmender Gelenkkörper gelagert ist.

Eine derartige Kopfstütze ist durch die DE-C-32 00 321 bekannt geworden. Die beiden seitlichen Gehäuse des Rahmens sind hierbei als metallische Blechbauteile ausgebildet. Der Gelenkkörper ist als langgestreckte Führungsbuchse mit einseitig angeformtem Gelenkauge ausgestaltet.

Die bekannte Lösung ist einmal durch ein verhältnismäßig hohes Gewicht gekennzeichnet. Des weiteren erfordert sie eine sehr genaue Bearbeitung des buchsenförmigen Gelenkkörpers einerseits und der darin geführten Haltestange andererseits, um eine korrekte Passung zwischen diesen beiden Teilen zu gewährleisten. Schon vergleichsweise geringe maßliche Abweichungen dieser erforderlichen Passung würden zu einer unerwünschten Geräuschbildung bei der Verstellung der Kopfstütze führen. Der technische und kostenmäßige Aufwand bei der Realisierung der bekannten Lösung ist also verhältnismäßig hoch.

Ausgehend von dem genannten Stand der Technik ist es Aufgabe der vorliegenden Erfindung, mit einfachen Mitteln und damit ohne großen Kostenaufwand eine möglichst geräuscharme Verstellbarkeit der Kopfstütze zu ermöglichen.

Erfindungsgemäß wird die Aufgabe bei einer Kopfstütze der eingangs bezeichneten Art dadurch gelöst, daß der Gelenkkörper aus zwei koaxial zueinander und zur betreffenden Haltestange hintereinander angeordneten, durch eine Feder miteinander verbundenen Teilen besteht, von denen ein oberer Teil des Gelenkkörpers entsprechende zylindrische Konturen besitzt und einen Gelenkteil bildet und ein unterer Teil zur Führung und lösbaren Verrastung der Haltestange in Vertikalrichtung dient, und daß das Gehäuse durch je einen seitlichen Deckel, der jeweils die äußere der beiden etwa parallelen Wandungen des Gehäuses bildet, verschließbar ist.

Durch die funktionelle Trennung von Gelenkfunktion einerseits und Führungsfunktion andererseits ist es möglich, die Drehreibung getrennt von anderen Parametern zu regulieren. Andererseits ist aber durch die federnde Verbindung von Gelenkteil und Führungsteil eine spielfreie Funktion des Gelenkkörpers insgesamt gewährleistet. Denn eventuelle Abweichungen im Durchmesser der Durchgangslöcher beider Teile für die Haltestange können durch eine entsprechende Federvorspannung in einfacher Weise kompensiert werden. Auf diese Weise ist es mit nur geringem technischen und kostenmäßigen Aufwand gelungen, Geräuschbildungen bei der Verstellung der Kopfstütze, die aufgrund von geringen Passungsabweichungen zwischen Gelenkkörper und Haltestange auftreten könnten, zu eliminieren.

Es wird vorgeschlagen, daß der (obere) Gelenkteil beidseitig zylindrische Lagerflächen aufweist und in entsprechend beidseitig unten an die keilförmigen divergierenden Wandungen angeformten Gelenkschalen gelagert ist.

Hierdurch wird die bei der bekannten Kopfstütze (siehe oben) vorgesehene einseitige Lagerung und die damit verbundenen Nachteile bei der Schwenkverstellung der Kopfstütze vorteilhaft vermieden.

Besonders vorteilhaft im Sinne der aufgabenmäßig angestrebten technisch einfachen und kostensparenden Verwirklichung der erfindungsgemäßen Kopfstütze wirkt es sich aus, wenn der Rahmen, einschließlich der seitlichen Gehäuse mit den darin angeordneten Wandungen sowie den zylindrischen Gelenkschalen einstückig als jeweils außenseitig offenes Kunststoff-Spritzteil ausgebildet ist.

In weiterer Ausgestaltung der Erfindung sind die seitlichen Deckel entsprechend den Gehäusen als Kunststoff-Spritzteile ausgebildet und mittels einstückig angeformter federnder Rastnasen in zugeordnete Rastausnehmungen der Gehäuse einklipsbar.

Eine derartige Ausbildung des Rahmens bzw. der seitlichen Gehäuse desselben ermöglicht in vorteilhafter Weise eine ebenso einfache und schnelle wie genaue Montage von Gelenkkörper und Haltestange in dem jeweils zugeordneten Rahmengehäuse.

Die seitlichen Deckel können als vom Gehäuse losgelöste Separatteile ausgebildet und gefertigt oder aber jeweils an einer ihrer beiden seitlichen Kanten durch ein Filmscharnier mit dem Gehäuse einstückig verbunden sein. An der anderen seitlichen Kante können die seitlichen Deckel jeweils mittels dort angeformter Rastnasen und im Gehäuse eingearbeiteter Rastausnehmungen mit dem Gehäuse verklipsbar sein.

Was nun den Gelenkkörper betrifft, so sollten auch dessen Teile, nämlich der (obere) Gelenkteil und der (untere) Führungsteil, als Kunststoff-Spritzteile ausgebildet sein. Hierdurch lassen sich die erforderlichen genauen Passungen sehr präzise und ohne aufwendige Nacharbeit realisieren.

Die erfindungsgemäße Kopfstütze zeichnet sich darüber hinaus durch ein vergleichsweise geringes Gewicht aus, da die tragenden Teile - wie oben ausgeführt - aus Kunststoff bestehen.

Nach einer bevorzugten Ausführungsform der Erfindung sind (oberer) Gelenkteil und (unterer) Führungsteil durch eine einstückige, mehrfach abgebogene Feder aus Stahldraht miteinander verbunden, wobei die Feder mit ihren Enden in entsprechende Ausnehmungen am Gelenkteil eingreift. Hierdurch wird die sehr vorteilhafte Möglichkeit eröffnet, daß die Feder mit einem etwa in Horizontalebene ausgerichteten Stegelement etwa radial in eine durchgehende Nut am Führungsteil eingreift und hierbei zugleich - als Gegenrastelement - mit Rastaussparungen an der Haltestange zusammenwirkt.

Die Verbindungsfeder der Gelenkkörperteile fungiert auf diese Weise zugleich als Raste für die vertikale Verstellbarkeit der Haltestangen und damit der gesamten Kopfstütze.

Weitere Ausgestaltungen und Vorteile der Erfindung können den Patentansprüchen 11 - 13 entnommen werden (siehe hierzu auch die nachstehende Figurenbeschreibung).

Zur Veranschaulichung und näheren Erläuterung der Erfindung dienen Ausführungsbeispiele, die in der Zeichnung dargestellt und im folgenden beschrieben sind. Es zeigt:
- Fig. 1: einen den tragenden Teil einer Kopfstütze für Kraftfahrzeugsitze bildenden Rahmen, in Fahrzeuglängsrichtung betrachtet (teilweise aufgebrochen, Haltestangen und Gelenkkörper weggelassen),
- Fig. 2: eine Teilansicht des rechten Rahmenteils entsprechend Fig. 1,einschließlich montierter Haltestange und Gelenkkörper,
- Fig. 3 und 4: jeweils eine Ansicht des Rahmens in Pfeilrichtung A (Fig. 1) betrachtet, wobei Haltestange und Gelenkkörper montiert sind, seitlicher Gehäuseabschluß jedoch weggelassen ist,
- Fig. 5: den Gegenstand von Fig. 3 und 4 in perspektivischer Darstellung (Haltestange und Gelenkkörper weggelassen),
- Fig. 6: Haltestange und Gelenkkörper nach Fig. 2 - 4, in perspektivischer Separatdarstellung,
- Fig. 7: eine seitliche Abdeckung für das Gehäuseteil nach Fig. 2 - 4, in perspektivischer Darstellung,
- Fig. 8: einen unteren Gehäuseabschluß, in perspektivischer Darstellung,
- Fig. 9: den (oberen)Gelenkteil des Gelenkkörpers nach Fig. 2 - 4 und 6, in Draufsicht betrachtet,
- Fig. 10: einen Schnitt längs der Linie X-X in Fig. 9,
- Fig. 11: den (unteren) Führungsteil des Gelenkkörpers nach Fig. 2 - 4 und 6, in Draufsicht betrachtet,
- Fig. 12: einen Schnitt längs der Linie XII-XII in Fig. 11,
- Fig. 13: den Gegenstand von Fig. 11 und 12 in Pfeilrichtung B betrachtet,
- Fig. 14: eine Feder zur Verbindung von Gelenkteil und Führungsteil des Gelenkkörpers nach Fig. 2 - 4 und 6, in Separatdarstellung und in Ansicht entsprechend Fig. 3 und 4, und
- Fig. 15: den Gegenstand von Fig. 14, in Darstellung entsprechend Fig. 2.

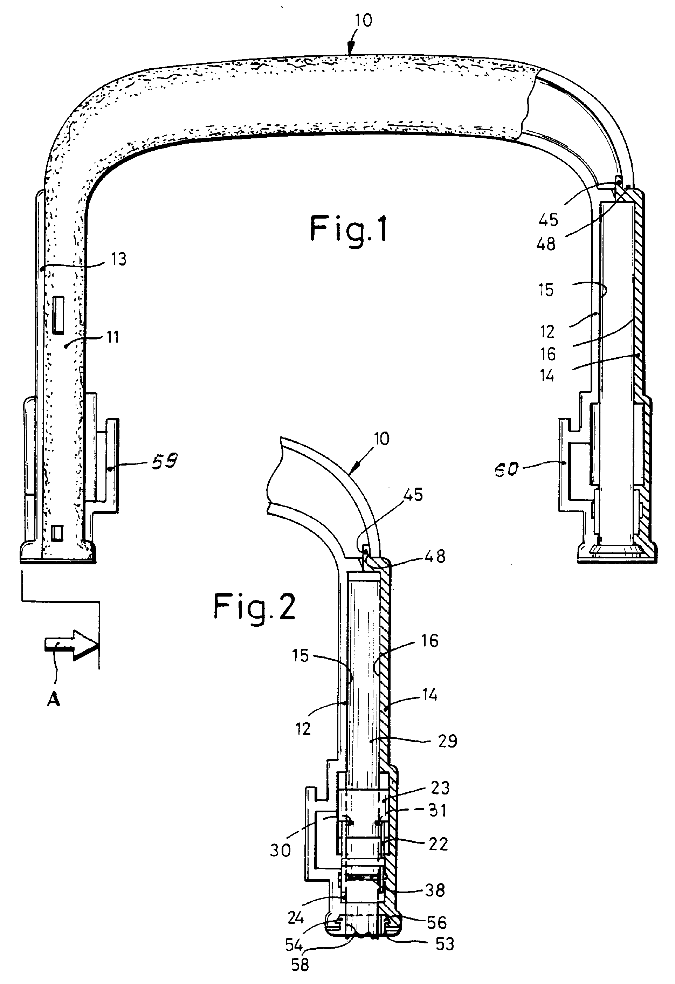

Der insgesamt aus Fig. 1 ersichtliche und mit 10 bezifferte Tragrahmen einer Kopfstütze für Kraftfahrzeugsitze ist bügelförmig ausgebildet. Er besitzt zwei seitliche, spiegelbildlich zueinander angeordnete und im übrigen völlig gleichartig ausgebildete Gehäuse, die mit 11 und 12 bezeichnet sind. Im fertig montierten Endzustand der Kopfstütze ist der Rahmen 10 in bekannter Weise von einem geeigneten Polstermaterial (nicht gezeigt) umgeben, z. B. dergestalt, daß sich in dem vom Rahmen 10 umschlossenen Raum, d. h. zwischen den beiden Gehäusen 11 und 12, ein freies Sichtfeld bildet.

Wie die Zeichnung, insbesondere Fig. 1, 2 und 5, des weiteren erkennen läßt, ist der Rahmen 10, einschließlich der beiden seitlichen Gehäuse 11, 12, einstückig als Kunststoff-Spritzteil ausgebildet. Die beiden Gehäuse 11 und 12 sind jeweils außenseitig durch einen ein Separatteil bildenden, im übrigen aber auch als Kunststoff-Spritzteil gefertigten seitlichen Deckel 13, 14 lösbar verschlossen.

Fig. 1 (aufgebrochene rechte Seite) und Fig. 2 zeigen, daß das Gehäuse 12 (ebenso wie das nicht aufgebrochen dargestellte, gleichartig ausgebildete andere Gehäuse 11) zwei etwa parallele Wandungen 15, 16 aufweist, wobei die äußere Wandung 16 vom seitlichen Deckel 14 (bzw. beim Gehäuse 11 vom seitlichen Deckel 13) gebildet wird. In der dazu senkrechten Blickrichtung (Pfeil A in Fig. 1) besitzt das Gehäuse 11 (und ebenso auch das gleichartige Gehäuse 12) eine zylindrische Gelenkschale 17 und - von dieser ausgehend nach oben - zwei keilförmig divergierende Wandungen 18 und 19. Am unteren Ende der nach oben und unten offenen Gelenkschale 17 schließen sich zwei weitere Wandungen an, die mit 20 und 21 beziffert sind.

In der zylindrischen Gelenkschale 17 ist ein aus zwei durch eine Feder 22 miteinander verbundenen Teilen 23, 24 bestehender, insgesamt mit 25 bezeichneter Gelenkkörper gelagert. Der (obere) Teil 23 bildet hierbei ein - nahezu ausschließlich Gelenkfunktion ausübendes - Gelenkteil und besitzt zu diesem Zweck zylinderförmig abgerundete Gelenkflächen 26, die mit den entsprechenden Zylinderflächen der Gelenkschale 17 zusammenwirken.

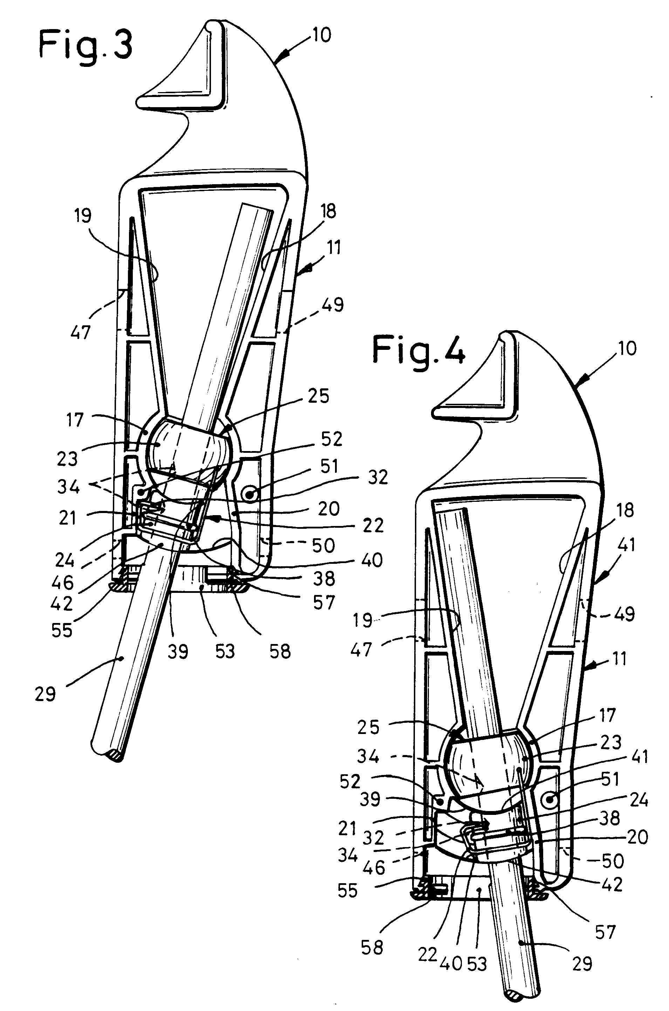

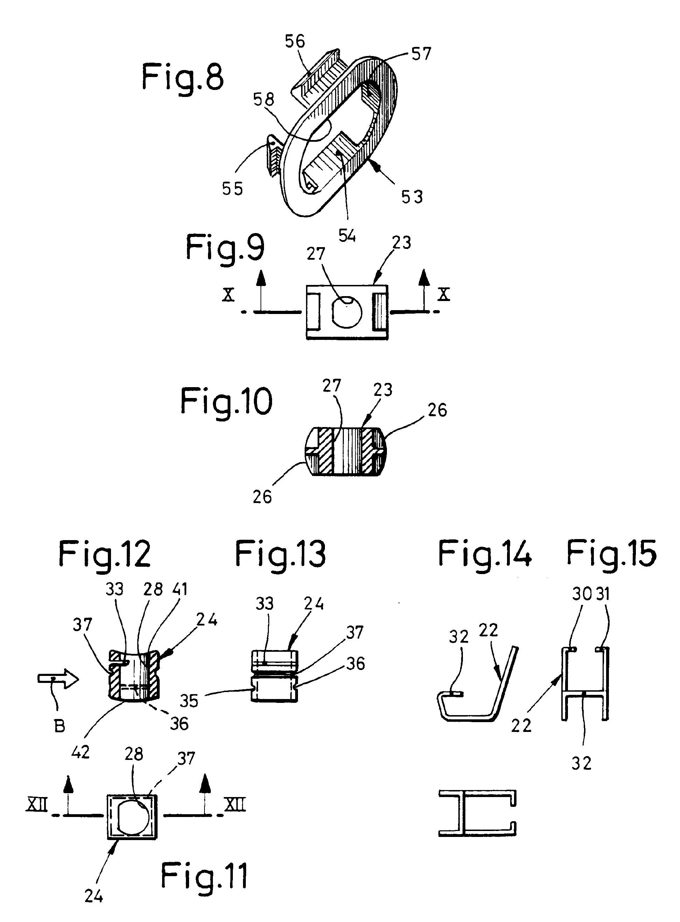

Wie insbesondere Fig. 9 - 12 erkennen lassen, weisen die Teile 23 und 24 des Gelenkkörpers 25 jeweils eine teilzylindrisch einseitig abgeflachte Durchgangsausnehmung 27 bzw. 28 auf. Die Durchgangsausnehmungen 27, 28 liegen in montiertem Zustand des Gelenkkörpers 25 (vgl. Fig. 3, 4 und 6) hintereinander und koaxial zueinander. Sie werden hierbei von einer Haltestange 29 durchsetzt. Der Querschnitt der Haltestange 29 entspricht dem Querschnitt der Durchgangsausnehmungen 27, 28, so daß die Haltestange 29 in dem Gelenkkörper 25 axial verschieblich, jedoch undrehbar geführt ist. Die Führungsfunktion bei der axialen Verschiebung der Haltestange 29 wird hierbei im wesentlichen nur von dem (unteren) Führungsteil 24 des Gelenkkörpers 25 wahrgenommen.

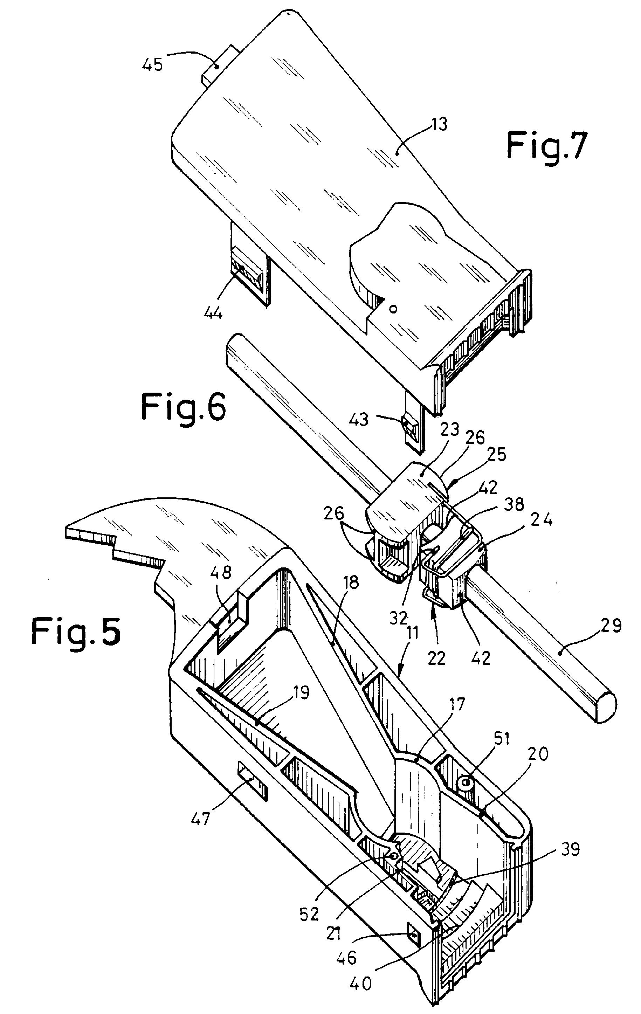

Die zur elastischen Verbindung der beiden Teile 24, 25 des Gelenkkörpers 25 dienende Feder 22 ist als mehrfach abgebogene und abgekröpfte Stahldrahtfeder ausgebildet (vgl. hierzu insbesondere Fig. 14 und 15), während die Teile 23, 24 des Gelenkkörpers 25 - ebenso wie der Rahmen 10 selbst - als Kunststoff-Spritzteile ausgeführt sind. Die Feder 22 besitzt zwei obere nach innen abgebogene Enden 30, 31, die beidseitig in entsprechende Ausnehmungen am Gelenkteil 23 eingreifen (siehe Fig. 2 - 4 und 6). Wie insbesondere Fig. 14 zeigt (vgl. aber auch Fig. 3, 4 und 6), weist die Feder 22 des weiteren ein etwa in Horizontalebene ausgerichtetes Stegelement 32 auf, welches eine durchgehende Nut 33 im (unteren) Führungsteil 24 des Gelenkkörpers 25 durchsetzt. In der im vorstehenden beschriebenen Weise ist die elastische Verbindung der beiden Teile 23, 24 des Gelenkkörpers 25 hergestellt. Zugleich dient aber das Stegelement 32 der Feder 22 auch noch als Gegenrastelement für die verschiedenen Rastpositionen der Haltestange 29 relativ zu dem Gelenkkörper 25. Wie aus Fig. 3 und 4 erkennbar ist, besitzt die Haltestange 29 zu diesem Zweck im Bereich ihrer Abflachung mehrere in gleichmäßigen Abständen hintereinander angeordnete Rastvertiefungen 34, die mit dem das entsprechende Gegenrastelement bildenden Stegelement 32 der Feder 22 zusammenwirken.

Im übrigen ist die Feder 22 in seitlichen Nuten 35, 36 des Führungselements 24 gehalten (vgl. hierzu insbesondere Fig. 12 und 13). Wie weiterhin insbesondere aus Fig. 12 und 13 ersichtlich ist, weist das Führungselement 24 eine weitere Nut 37 auf, die umlaufend in alle vier Flächen des Führungselements 24 eingearbeitet ist. In die umlaufende Nut 37 greift ein entsprechend quadratisch gestaltetes Dicht- und Halteelement 38 ein (siehe insbesondere Fig. 2 - 4 und 6).

Wie des weiteren aus Fig. 3 und 4 sowie aus Fig. 5 hervorgeht, ist der Winkel, den der Rahmen 10 bei seiner Schwenkbewegung um das Lager 17, 25 auszuführen vermag, durch die nach oben divergierenden Wandungen 18, 19 einerseits und durch die beiden sich unten an die Lagerschale 17 anschließenden Wandungen 20, 21 andererseits bestimmt. In der einen Extremstellung (Fig. 4) kommt das Führungsteil 24 mit der Wandung 20 zur Anlage, während in der anderen Extremstellung (Fig. 3) die Feder 22 als Gegenanschlag zu der in diesem Fall die Anschlagfläche bildenden Wandung 21 bildet.

Eine die Funktion des Lagers 17, 25 während des Schwenkvorganges unterstützende Rolle spielen des weiteren kreisförmige Gleitflächen 39, 40, die in das Gehäuse 11 (bzw. 12) einstückig eingeformt sind (siehe insbesondere Fig. 3, 4 und 6). Diese Gleitflächen 39, 40 kooperieren beim Schwenkvorgang des Rahmens 10 gegenüber der Haltestange 29 mit den entsprechend kreisförmig gestalteten Stirnflächen 41, 42 des Führungselements 24.

Um Haltestange 29 und Gelenkkörper 25 als Baueinheit (siehe insbesondere Fig. 6) jeweils in das zugeordnete Gehäuse 11 bzw. 12 einbauen zu können, sind die Gehäuse 11, 12 jeweils außenseitig offen ausgebildet (siehe insbesondere Fig. 5). Nach erfolgter Montage der Baueinheit 29, 25 können die Gehäuse 11, 12 dann durch die bereits oben erwähnten seitlichen Deckel 13 und 14 verschlossen werden. Im geschlossenen Zustand der Gehäuse 11, 12 dient dann - wie insbesondere Fig. 2 erkennen läßt - die Gehäusewandung 15 einerseits und die Innenwandung 16 des seitlichen Deckels 14 (bzw. 13) andererseits als Führungsfläche für die jeweilige Haltestange 29 gegenüber dem Rahmen 10, insbesondere wenn eine Vertikalverstellung des Rahmens 10 gegenüber den Haltestangen 29 stattfindet.

Aufgrund der im vorstehenden beschriebenen Gegebenheiten ist eine gute Fixierung der seitlichen Deckel 13, 14 gegenüber den zugeordneten Gehäusen 11, 12 erforderlich. Wie insbesondere aus Fig. 7 hervorgeht, weist zu diesem Zweck der seitliche Deckel 13 (ebenso wie auch der in Fig. 1 rechtsseitig angeordnete zweite Deckel 14) an allen vier Kanten einstückig angeformte federnde Rastnasen 43, 44, 45 auf, die in entsprechend zugeordnete Rastausnehmungen 46 - 50 im Gehäuse 11 (bzw. 12) einklipsbar oder einsteckbar (Teile 45, 48) sind. (Die den Rastausnehmungen 49, 50 (Fig. 3 und 4) zugeordneten Rastnasen sind - da verdeckt angeordnet - aus Fig. 7 nicht erkennbar.)

Zur Zentrierung von Gehäuse 11 (bzw. 12) und seitlichem Deckel 13 (bzw. 14) dienen jeweils Zentrierbohrungen 51, 52, die mit entsprechenden Zentrierstiften am zugeordneten seitlichen Deckel 13 bzw. 14 (nicht gezeigt) zusammenwirken.

Fig. 2, 3 und 4 machen des weiteren deutlich, daß der untere Abschluß des jeweiligen Gehäuses 13 bzw. 14 von einem in Fig. 8 als Separatteil gezeigten ringförmig/oval ausgebildeten Deckelteil 53 gebildet wird. Das Deckelteil 53 ist - ebenso wie die Gehäuse 11, 12 und die seitlichen Deckel 13, 14 - als Kunststoff-Spritzteil ausgebildet und besitzt an seiner dem Gehäuse zugewandten Fläche vier einstückig angeformte Rastnasen 54 - 57 zur lösbaren Verklipsung mit dem Gehäuse 11 (bzw. 12) einerseits und dem zugeordneten seitlichen Deckel 13 (bzw. 14) andererseits. Hierdurch wird auch an den beiden unteren Enden des Rahmens 10 der Zusammenhalt der Gehäuse 11, 12 mit den zugeordneten seitlichen Deckeln 13, 14 vervollkommnet. Die erforderliche Durchtrittsöffnung für die Haltestange 29 ist in dem unteren Deckelteil mit 58 beziffert.

Bei der Herstellung der Kopfstütze kann man den Tragrahmen in an sich bekannter Weise vollflächig mit einem Polsterkörper umgeben oder aber - wie eingangs erwähnt - mit einer ringförmigen, ein freies Sichtfeld aufweisenden Polsterung ausstatten, wobei man zweckmäßig den noch nicht mit der Querstrebe versehenen Tragrahmen 10 durch eine kleine Öffnung in die Verkleidungshülle einbringt. Dann schiebt man die Querstrebe durch dieselbe Öffnung und verrastet sie bei 59, 60 mit den Schenkein 11, 12 des Tragrahmens. Ist das geschehen, so kann man die Verkleidungshülle ausschäumen, so daß sie prall wird und die notwendige Polsterung erhält.

## Patentansprüche

1. Kopfstütze für Kraftfahrzeugsitze mit einem von einer Polsterung umgebenen Rahmen (10), der an zwei parallelen Haltestangen (29) vertikal verstellbar und um eine Horizontalachse schwenkbar angeordnet ist und beidseitig der Kopfstütze je ein die zugeordnete Haltestange (29) aufnehmendes Gehäuse (11, 12) bildet, welches zwei quer zur gemeinsamen Ebene der Haltestangen vertikal verlaufende etwa zueinander parallele Wandungen (15, 16), eine mit einer etwa horizontal zu diesen Wandungen senkrecht verlaufenden Achse zylindrische Gelenkschale (17) und - ausgehend von der zylindrischen Gelenkschale - zwei quer zu den etwa parallelen Wandungen (15, 16) keilförmig nach oben divergierende Wandungen (18, 19) aufweist, wobei in der zylindrischen Gelenkschale (17) ein die betreffende Haltestange (29) nach Art einer Führungsbuchse aufnehmender Gelenkkörper (25) gelagert ist, dadurch gekennzeichnet, daß der Gelenkkörper (25) aus zwei koaxial zueinander und zur betreffenden Haltestange (29) hintereinander angeordneten, durch eine Feder (22) miteinander verbundenen Teilen (23, 24) besteht, von denen ein oberer Teil (23) des Gelenkkörpers (25) entsprechende zylindrische Konturen (26) besitzt und einen Gelenkteil bildet und ein unterer Teil (24) zur Führung und lösbaren Verrastung der Haltestange (29) in Vertikalrichtung dient, und daß das Gehäuse (11, 12) durch je einen seitlichen Deckel (13, 14), der jeweils die äußere (16) der beiden etwa parallelen Wandungen (15, 16) des Gehäuses (11, 12) bildet, verschließbar ist.

2. Kopfstütze nach Anspruch 1, dadurch gekennzeichnet, daß die zylindrischen Konturen (26) beidseitig des oberen Gelenkteils (23) als zylindrische Lagerflächen (26) ausgebildet sind, die mit entsprechend beidseitig unten an die keilförmigen divergierenden Wandungen (18, 19) angeformten Gelenkschalen (17) zusammenwirken.

3. Kopfstütze nach Anspruch 1 oder 2, dadurch gekennzeichnet, daß der Rahmen (10), einschließlich der seitlichen Gehäuse (11, 12) mit den darin angeordneten Wandungen (15, 18, 19, 20, 21) sowie den zylindrischen Gelenkschalen (17) einstückig als jeweils gegenüber der Wandung (15) offenes Kunststoff-Spritzteil ausgebildet ist.

4. Kopfstütze nach Anspruch 1, 2 oder 3, dadurch gekennzeichnet, daß die seitlichen Deckel (13, 14) entsprechend den Gehäusen (11, 12) als Kunststoff-Spritzteile ausgebildet und mittels einstückig angeformter federnder Rastnasen (43 - 45) in zugeordnete Rastausnehmungen (46 - 50) der Gehäuse (11, 12) einklipsbar bzw. einsteckbar sind.

5. Kopfstütze nach mindestens einem der Ansprüche 1 bis 4, dadurch gekennzeichnet, daß die seitlichen Deckel (13, 14) als vom Gehäuse (11, 12) losgelöste Separatteile ausgebildet und gefertigt sind (Fig. 7).

6. Kopfstütze nach mindestens einem der Ansprüche 1 bis 5, dadurch gekennzeichnet, daß die seitlichen Deckel (13, 14) jeweils an einer ihrer beiden seitlichen Kanten durch ein Filmscharnier mit dem Gehäuse (11, 12) einstückig verbunden und an der anderen seitlichen Kante mittels dort angeformter Rastnasen (43, 44) und im Gehäuse eingearbeiteter Rastausnehmungen (46, 47) mit dem Gehäuse verklipsbar sind.

7. Kopfstütze nach einem oder mehreren der vorstehenden Ansprüche, dadurch gekennzeichnet, daß (oberer) Gelenkteil (23) und (unterer) Führungsteil (24) jeweils als Kunststoff-Spritzteile ausgebildet sind.

8. Kopfstütze nach einem oder mehreren der vorstehenden Ansprüche, dadurch gekennzeichnet, daß die das (obere) Gelenkteil (23) und das (untere) Führungsteil (24) miteinander verbindende, einstückig aus Stahldraht und mehrfach abgebogen ausgebildete Feder (22) mit ihren (oberen) Enden (30, 31) in entsprechende Ausnehmungen am Gelenkteil (23) eingreift.

9. Kopfstütze nach Anspruch 8, dadurch gekennzeichnet, daß die Feder (22) mit einem etwa in Horizontalebene ausgerichteten Stegelement (32) etwa radial in eine durchgehende Nut (33) am Führungsteil (24) eingreift und hierbei zugleich - als Gegenrastelement - mit Rastvertiefungen (34) an der Haltestange (29) zusammenwirkt (Fig. 3 und 4).

10. Kopfstütze nach einem oder mehreren der vorstehenden Ansprüche, dadurch gekennzeichnet, daß das Führungsteil (24) als Anschlag zur beidseitigen Begrenzung der Schwenkbewegung des Rahmens (10) dient und hierbei mit an die nach unten offenen Gelenkschalen (17) einstückig angeformten, senkrecht zu den Wandungen (15, 16) und annähernd vertikal verlaufenden Gegenanschlagflächen (20, 21) kooperiert (Fig. 3 und 4).

11. Kopfstütze nach einem oder mehreren der vorstehenden Ansprüche, dadurch gekennzeichnet, daß in die jeweils innenliegende (15) der etwa parallelen Wandungen (15, 16) der Gehäuse (11, 12) konzentrisch zum Mittelpunkt des Schwenkgelenks (17, 25) liegende teilkreisförmige Führungsflächen (39, 40) eingeformt sind, auf denen das Führungsteil (24) während der Schwenkbewegung mit entsprechend teilkreisförmig ausgestalteten Stirnflächen (41, 42) gleitet (Fig. 3 - 5).

12. Kopfstütze nach einem oder mehreren der vorstehenden Ansprüche, dadurch gekennzeichnet, daß die beiden Gehäuse (11, 12) des Rahmens (10) an ihrem unteren Ende je durch ein als Kunststoff-Spritzteil ausgebildetes, eine Durchtrittsöffnung (58) für die betreffende Haltestange (29) und federnde Rastnasen (54, 57) aufweisendes Deckelteil (53) lösbar verschließbar sind.

13. Kopfstütze nach Anspruch 12 und einem oder mehreren der vorstehenden Ansprüche, dadurch gekennzeichnet, daß der Rahmen (10) U-förmig ausgebildet ist und seine Schenkel (Gehäuse 11, 12) an ihren freien Enden je eine Aufnahme (59, 60) zur lösbaren Verbindung mittels einer Querstrebe (nicht dargestellt) aufweisen und daß der Rahmen in eine schlauchförmige Verkleidungshülle (nicht dargestellt) einbringbar und in dieser zum anschließenden Ausschäumen der Polsterung mittels der Querstrebe festlegbar ist.

## Claims

1. Headrest for motor vehicle seats having a frame (10), surrounded by cushioning, which is arranged for vertical adjustment on two parallel supporting rods (29) and for pivoting about a horizontal axle and on each side of the headrest there is formed a housing (11, 12) for receiving in each case the associated supporting rod (29), which housing has two vertical walls (15, 16) running approximately parallel to each other extending transverse to the common plane of the supporting rods, a vertically extending cylindrical joint socket (17) running approximately horizontal to these walls and - starting from the cylindrical joint socket - having two walls (18, 19) diverging upwards in a wedge-shaped manner transverse to the approximately parallel walls (15, 16), whereby in the cylindrical joint socket (17) there is located a joint body (25) for receiving the relevant supporting rod (29) in the manner of a guide bush, **characterised** in that the joint body (25) consists of two parts (23, 24), interconnected by a spring (22), arranged coaxially to each other and arranged one behind the other in relation to the relevant supporting rod (29), of which an upper part (23) of the joint body (25) has corresponding cylindrical contours (26) and forms one joint part and a lower part (24) serves to guide and releasably lock the supporting rod (29) in the vertical direction, and that the housing (11, 12) can be closed in each case by a lateral cover (13, 14) which respectively forms the outer (16) of the two parallel walls (15, 16) of the housing (11, 12).

2. Headrest according to claim 1, **characterised** in that the cylindrical contours (26) on both sides of the upper joint part (23) are constructed as cylindrical bearing surfaces (26) which cooperate with corresponding joint sockets (17) moulded on both sides to the bottom of the diverging wedge-shaped walls (18, 19).

3. Headrest according to claim 1 or 2, **characterised** in that the frame (10), inclusive of the lateral housing (11, 12) with the walls (15, 18, 19, 20, 21) arranged therein as well as the cylindrical joint sockets (17), is constructed in one piece in the form of an injection-moulded plastics part in each case open compared to the wall (15).

4. Headrest according to claim 1, 2 or 3, **characterised** in that the lateral covers (13, 14) are constructed as injection-moulded plastics parts corresponding to the housings (11, 12) and by means of moulded-on resilient latches (43 - 45) can be snapped in or inserted in associated snap-in recesses (46 - 50) of the housings (11, 12).

5. Headrest according to at least one of the claims 1 to 4, **characterised** in that the lateral covers (13, 14) are constructed and manufactured as separate parts released from the housing (11, 12) (Fig. 7).

6. Headrest according to at least one of the claims 1 to 5, **characterised** in that the lateral covers (13, 14) are connected in one piece with the housing (11, 12) through a film hinge on one of its two respective edges and connected to the housing in a snap-in manner by means of snap-in recesses (46, 47) worked into the housing and snap-in latches (43, 44) moulded to the other side edge.

7. Headrest according to at least one of the preceding claims, **characterised** in that (upper) joint part (23) and (lower) guide part (24) are constructed as injection-moulded plastics parts respectively.

8. Headrest according to at least one of the preceding claims, **characterised** in that the spring (22), constructed in one piece from steel wire and being bent several times, for connecting together the (upper) joint part (23) and the (lower) guide part (24), engages with its (upper) ends (30, 31) in corresponding recesses of the joint part (23).

9. Headrest according to claim 8, **characterised** in that the spring (22) with a web element (32) aligned approximately in the horizontal plane engages approximately radially in a continuous groove (33) of the guide part (24) and thus at the same time - as a counter snap-in element - cooperates with snap-in recesses (34) of the supporting rod (29) (Fig. 3 and 4).

10. Headrest according to at least one of the preceding claims, **characterised** in that the guide part (24) serves as the stop for limiting on both sides the swivel movement of the frame (10) and thus cooperates with the almost vertically extending counter stop surfaces (20, 21) running perpendicularly to the walls (15, 16) moulded in one piece to the joint sockets (17) which are open towards the bottom.

11. Headrest according to at least one of the preceding claims, **characterised** in that moulded into the inside wall (15) of the two approximately parallel walls (15, 16) of the housing (11, 12), respectively, are partly circular guide surfaces (39, 40), situated concentrically to the centre point of the swivel joint (17, 25), on which during the swivel movement the guide part (24) slides with corresponding partly circular facing surfaces (41, 42) (Fig. 3 - 5).

12. Headrest according to at least one of the preceding claims, **characterised** in that the two housings (11, 12) of the frame (10) can be releasably closed at their lower ends by an injection-moulded plastics cover part (53) having resilient latches (54, 57) and a through opening (58) for the relevant supporting rod (29).

13. Headrest according to claim 12 and at least one of the preceding claims, **characterised** in that the frame (10) is of U-shaped construction and its arms (housings 11, 12) at their free ends each have a receptacle (59, 60) for releasable connection by means of a transverse web (not shown) and that the frame can be introduced into a tubular casing (not shown) and inside this can be secured by the transverse web for subsequent foaming-on of the cushioning.

## Revendications

1. Appui-tête pour siège de véhicule automobile comportant un cadre (10) entouré d'un rembourrage, qui est monté sur deux tiges-supports (29) parallèles avec possibilité de réglage dans la direction verticale et possibilité de pivotement autour d'un axe horizontal et forme, de part et d'autre de l'appui-tête, un boîtier (11, 12) qui reçoit la tige-support (29) associée, lequel boîtier présente deux parois (15, 16) sensiblement parallèles entre elles qui s'étendent dans la direction verticale, transversalement au plan commun des tiges-supports, un logement d'articulation (17) cylindrique dont l'axe s'étend sensiblement horizontalement, perpendiculairement auxdites parois et - partant du logement d'articulation cylindrique - deux parois (18, 19) qui divergent vers le haut en formant un coin, transversalement aux parois (15, 16) sensiblement parallèles, un élément d'articulation (25) qui reçoit à la manière d'un manchon de guidage la tige-support (29) correspondante étant monté dans le logement d'articulation (17) cylindrique, caractérisé par le fait que l'élément d'articulation (25) est formé de deux parties (23, 24) mutuellement coaxiales et coaxiales à la tige-support (29) concernée qui sont disposées l'une derrière l'autre, sont liées entre elles par un ressort (22) et parmi lesquelles une partie (23) supérieure de l'élément d'articulation (25) présente des contours (26) cylindriques adaptés et forme une partie d'articulation et une partie (24) inférieure sert au guidage et au verrouillage avec possibilité de déverrouillage de la tige-support (29) dans la direction verticale et par le fait que le boîtier (11, 12) est fermé par un couvercle (13, 14) latéral qui, parmi les deux parois (15, 16) sensiblement parallèles du boîtier (11, 12), constitue chaque fois la paroi (16) extérieure.

2. Appui-tête selon la revendication 1, caractérisé par le fait que les contours cylindriques (26) sont aménagés de chaque côté de la partie supérieure (23) d'articulation sous forme de surfaces de palier (26) cylindriques qui coopèrent avec des logements d'articulation (17) de forme adaptée aménagés de chaque côté, dans la partie inférieure des parois (18, 19) qui divergent en forme de coin.

3. Appui-tête selon la revendication 1 ou 2, caractérisé par le fait que le cadre (10), y compris les boîtiers (11, 12) latéraux avec les parois (15, 18, 19, 20, 21) prévues dans ceux-ci et les logements d'articulation (17) cylindriques est réalisé d'une pièce, sous forme d'élément en matière plastique moulé par injection, ouvert en regard de la paroi (15).

4. Appui-tête selon la revendication 1, 2 ou 3, caractérisé par le fait que les couvercles (13, 14) latéraux, comme les boîtiers (11, 12), sont réalisés sous forme de pièces en matière plastique moulées par injection et peuvent être enclipsés ou encliquetés dans des ouvertures (46 - 50) adaptées du boîtier (11, 12) par l'intermédiaire de nez d'encliquetage (43 - 45) élastiques venus de moulage.

5. Appui-tête selon l'une au moins des revendications 1 à 4, caractérisé par le fait que les couvercles (13, 14) latéraux sont agencés et réalisés sous forme de pièces distinctes séparées du boîtier (11, 12).

6. Appui-tête selon l'une au moins des revendications 1 à 5, caractérisé par le fait que les couvercles (13, 14) latéraux, au niveau de l'un de leurs deux bords latéraux, sont liés au boîtier (11, 12) par une charnière film pour former un ensemble monobloc et, au niveau de l'autre bord latéral, s'encliquettent sur le boîtier par l'intermédiaire de nez d'encliquetage (43, 46) formés sur les couvercles et d'ouvertures d'encliquetage (46, 47) aménagées dans le boîtier.

7. Appui-tête selon une ou plusieurs des revendications précédentes, caractérisé par le fait que la partie d'articulation (23) (supérieure) et la partie de guidage (24) (inférieure) sont agencées chacune sous forme de pièce en matière plastique moulée par injection.

8. Appui-tête selon une ou plusieurs des revendications précédentes, caractérisé par le fait que le ressort (22) qui relie entre elles la partie d'articulation (23) (supérieure) et la partie de guidage (24) (inférieure) est réalisé d'une seule pièce en fil d'acier plié en plusieurs points et pénètre par ses extrémités (30, 31) (supérieures) dans des évidements adaptés dans la partie d'articulation (23).

9. Appui-tête selon la revendication 8 caractérisé par le fait que le ressort (22) par une partie (32) située dans un plan sensiblement horizontal pénètre radialement dans une rainure (33) continue et coopère - en tant que contre-élément d'encliquetage - avec des cavités d'encliquetage (34) sur la tige-support (29) (figures 3 et 4).

10. Appui-tête selon une ou plusieurs des revendications précédentes, caractérisé par le fait que la partie de guidage (24) sert de butée limitant de chaque côté le pivotement du cadre (10) et coopère avec des surfaces formant contre-butées (20, 21) qui constituent un ensemble monobloc avec les logements d'articulation (17) ouvertes vers le bas et s'étendent perpendiculairement aux parois (15, 16) et sensiblement verticalement (figures 3 et 4).

11. Appui-tête selon une ou plusieurs des revendications précédentes, caractérisé par le fait que des surfaces de guidage (39, 40) en forme de secteurs de cercle concentriques au centre de l'articulation (17, 25) sur lesquelles, lors du pivotement, la partie de guidage (24) glisse par des surfaces frontales (41. 42) en secteur de cercle agencées en conséquence, sont aménagées dans la paroi (15) qui, parmi les parois (15, 16) sensiblement parallèles des boîtiers (11, 12), est située côté intérieur (figures 3 - 5).

12. Appui-tête selon une ou plusieurs des revendications précédentes, caractérisé par le fait que les deux boîtiers (11, 12) du cadre (10), à leur extrémité inférieure, peuvent être fermés avec possibilité de démontage par une partie formant couvercle (53) pourvue d'une ouverture de passage (58) pour la tige-support (29) concernée et de nez d'encliquetage (54, 57) élastiques, laquelle partie formant couvercle est agencée sous forme de pièce en matière plastique moulée par injectée.

13. Appui-tête selon la revendication 12 et une ou plusieurs des revendications précédentes, caractérisé par le fait que le cadre (10) a la forme d'un U et que ses ailes (boîtiers 11, 12) présentent à leur extrémité libre chacune un logement (59, 60) destiné à assurer la liaison démontable avec une traverse (non représentée) et par le fait que le cadre peut être introduit dans une enveloppe d'habillage en forme de tube (non représenté) et immobilisé dans celle-ci au moyen de la traverse pour la réalisation par moussage du rembourrage.
